Europäisches Patentamt

European Patent Office

Office européen des brevets

(19)

(11) **EP 1 560 283 A1**

(12) **EUROPEAN PATENT APPLICATION**
published in accordance with Art. 158(3) EPC

(43) Date of publication:
03.08.2005 Bulletin 2005/31

(51) Int Cl.⁷: $H01M \ 4/86$, $H01M \ 8/10$

(21) Application number: 03756719.5

(22) Date of filing: 21.10.2003

(86) International application number:
PCT/JP2003/013415

(87) International publication number:
WO 2004/038836 (06.05.2004 Gazette 2004/19)

(84) Designated Contracting States:
AT BE BG CH CY CZ DE DK EE ES FI FR GB GR
HU IE IT LI LU MC NL PT RO SE SI SK TR

(30) Priority: 28.10.2002 JP 2002312645
30.10.2002 JP 2002315501
30.10.2002 JP 2003015801

(71) Applicant: HONDA MOTOR CO., Ltd.
Tokyo 107-8556 (JP)

(72) Inventors:
• Fukuda, Kaoru,
c/o KK Honda Gijutsu Kenkyusho
Wako-shi, Saitama 351-0193 (JP)
• Tani, Masaki, c/o KK Honda Gijutsu Kenkyusho
Wako-shi, Saitama 351-0193 (JP)

• Kaji, Hayato, c/o KK Honda Gijutsu Kenkyusho
Wako-shi, Saitama 351-0193 (JP)
• Inai, Shigeru, c/o KK Honda Gijutsu Kenkyusho
Wako-shi, Saitama 351-0193 (JP)
• Muro, Takeshi, c/o KK Honda Gijutsu Kenkyusho
Wako-shi, Saitama 351-0193 (JP)
• Watanabe, Shinya,
c/o KK Honda Gijutsu Kenkyusho
Wako-shi, Saitama 351-0193 (JP)

(74) Representative: Dey, Michael, Dr. et al
Weickmann & Weickmann,
Patentanwälte,
Postfach 86 08 20
81635 München (DE)

(54) **ELECTRODE STRUCTURE FOR SOLID POLYMER TYPE FUEL CELL**

(57) A water holding layer having a carbon-based material and a water holding material is arranged on an anode diffusion layer. The water holding material is contained at 5 to 20 wt% of total weight of the water holding material and an electron conductive material. Alternatively, carbon particles having water absorption amount at saturated water vapor pressure at 60°C is not less than 150 cc/g are contained in the anode diffusion layer. Water absorption ratio of the anode diffusion layer at 60°C is in a range of 40 to 85%, a differential pressure is in a range of 60 to 120 mmaq, and a ratio of quantity of electric charge of catalytic material of the cathode catalytic layer existing in proton conductive passage from the polymer electrolyte membrane is not less than 15% of the quantity of electric charge of all the catalytic material existing in the cathode catalytic layer. Furthermore, a layer including carbon particles having water absorption amount at saturated water vapor pressure at 60°C of not less than 150 cc/g and fluorine resin, is arranged on a carbon-based material having a contact angle with water of not more than 90° by performing a hydrophilic treatment. The water absorption ratio at 60°C is in a range of 40 to 85 wt%, and the penetration resistance is not more than 5mΩ.

EP 1 560 283 A1

**Description**

Technical Field

The present invention relates to a membrane electrode assembly for polymer electrolyte fuel cells, and in particular, relates to a membrane electrode assembly for polymer electrolyte fuel cell in which efficiency deterioration when there is a shortage of fuel is reduced.

Background Art

A unit of a polymer electrolyte fuel cell is formed by laminating separators at both sides of a tabular membrane electrode assembly (MEA), and then plural units are laminated to form a fuel cell stack. The membrane electrode assembly is a layered structure in which a polymer electrolyte membrane is arranged between a pair of gas diffusion electrodes forming a cathode and an anode. The gas diffusion electrode is a structure in which a gas diffusion layer is formed on an outer surface of an electrode catalytic layer contacting the electrolyte membrane. In such a fuel cell, hydrogen gas supplied through a gas passage of the separator facing on the gas diffusion electrode of the anode and oxidizing gas supplied through a gas passage of the separator facing on the gas diffusion electrode of the cathode electrochemically react and thereby generate electricity.

In an operation of the fuel cell, the gas diffusion layer conducts electrons generated by the electric chemical reaction between the electrode catalytic layer and the separator, and at the same time, diffuses fuel gas and oxidizing gas. Protons ($H^+$) and electrons are generated from the fuel gas in the anode electrode catalytic layer, water is generated from oxygen, protons, and electrons in the cathode electrode catalytic layer, and protons are ion conducted through the electrolyte membrane. As a result, electric power can be obtained between the electrode catalytic layers of cathode and anode.

During driving of vehicles or the like, power output sometimes varies greatly. Therefore, in the case in which the above-mentioned polymer electrolyte fuel cell is used as a power source, fuel gas cannot be supplied sufficiently to meet the required amount of fuel gas. In this case, fuel gas runs short temporarily in the membrane electrode assembly. During the circumstance of fuel shortage, current is maintained by using protons supplied from the electrolysis of water shown in following formula (1).

$$2H_2O \rightarrow 4H^+ + 4e^- + O_2 \ (1) \tag{1}$$

Furthermore, in the case in which the fuel shortage continues more in the circumstances promoting the electrolysis of water, the following corrosion reaction of carbon (2) may occur.

$$2H_2O + C \rightarrow 4H^+ + 4e^- + CO_2 \ (2) \tag{2}$$

In the reaction (2), carbon black which is a support body of the catalyst is corroded, and power generation efficiency of the membrane electrode assembly is deteriorated.

To solve such a problem, a technique in which corrosion resistance of carbon is improved by increasing supported ratio of catalyst or by using carbon having higher corrosion resistance is disclosed in Patent Application Publication No. 01/15254). Furthermore, from the viewpoint of the above reaction of formula (1), a technique in which catalyst promoting electrolysis of water is added to the anode catalytic layer (Patent Application Publications No. 01/15247 and No. 01/15255), a technique in which material to increase water amount is added to the anode catalytic layer or diffusion layer (Patent Application Publications No. 01/15255 and No. 01/15249) or the like are disclosed.

The conventional techniques mentioned above are effective in a temporary fuel shortage; however, in the case in which fuel shortage occurs repeatedly in practical operations or in the case of a rated operation, there is a problem of the flooding phenomenon. Flooding is a phenomenon in which micropores of gas diffusion flow passage in the anode catalytic layer are filled with water, and therefore gas diffusion is inhibited. The flooding inhibits supply of fuel gas, enlarges the area of fuel shortage in the anode (fuel gas electrode), and promotes corrosion reaction of carbon, and as a result, deteriorates efficiency of the membrane electrode assembly.

DISCLOSURE OF THE INVENTION

The present invention was completed in view of the above-mentioned circumstances. An object of the present

EP 1 560 283 A1

invention is to provide a membrane electrode assembly for polymer electrolyte fuel cell in which efficiency deterioration at shortage of fuel is restrained.

In the membrane electrode assembly for polymer electrolyte fuel cell of the present invention having a polymer electrolyte membrane, a cathode and an anode both having catalytic layers and diffusion layers, the anode diffusion layer has characteristics (1) to (3) below.

(1) water holding layer which contains 5 to 20 wt% of water holding material improving water holding property to the total amount of electron conductive material and water holding material, is arranged on carbon-based material, or carbon particles whose water absorption amount at saturated water vapor pressure at 60°C is not less than 150 cc/g is contained,
(2) water absorption ratio of the anode diffusion layer at 60°C is in a range of 40 to 85%, and
(3) differential pressure measured by a differential pressure measuring method is in a range of 60 to 120 mmaq, and ratio of quantity of electric charge of catalytic material of the cathode catalytic layer existing in a proton conductive passage from the polymer electrolyte membrane measured by a cyclic voltammetric method is not less than 15% to the quantity of electric charge of all the catalytic material existing in the cathode catalytic layer.

In the present invention, the anode catalytic layer does not have a water holding property; however, the water holding layer in which water holding material is contained at 5 to 20 wt% to the total amount of the electron conductive material and the water holding material, is arranged on the carbon-based material, or alternatively, carbon particles having water absorption amount at saturated water vapor pressure at 60°C is not less than 150 cc/g, are contained. Therefore, water absorption ratio of the anode diffusion layer at 60°C is in a range of 40 to 85%, and the anode diffusion layer has high water holding property. In the case in which fuel runs short, water is supplied from the anode diffusion layer to the anode catalytic layer, the water is electrolyzed in the anode catalytic layer, protons are supplied to the polymer electrolyte membrane.

In this way, in the membrane electrode assembly for polymer electrolyte fuel cell of the present invention, since the water is supplied to the anode catalytic layer only at shortage of fuel, flooding does not occur in the anode catalytic layer, and on the other hand, since water is electrolyzed in the anode catalytic layer during the shortage of fuel, corrosion reaction of carbon which is a next step of electrolysis of water can be restrained.

In a membrane electrode assembly for polymer electrolyte fuel cell of another preferred embodiment of the present invention, having a polymer electrolyte membrane, and an anode and a cathode both having catalytic layers and diffusion layers, the anode diffusion layer has characteristics (1) to (4) below.

(1) a layer having fluorine resin and carbon particles having water absorption amount at saturated water vapor pressure at 60°C of not less than 150 cc/g, is arranged on a carbon-based material which is processed to be hydrophilic and to have a contact angle with water of not more than 90°,
(2) water absorption ratio of the anode diffusion layer at 60°C is in a range of 40 to 85%,
(3) penetration resistance measured by a penetration resistance method is not more than 5 m$\Omega$, and
(4) differential pressure measured by a differential pressure measuring method is in a range of 60 to 120 mmaq, and ratio of quantity of electric charge of catalytic material of the cathode catalytic layer existing in a proton conductive passage from the polymer electrolyte membrane measured by a cyclic voltammetric method is not less than 15% to the quantity of electric charge of all the catalytic material existing in the cathode catalytic layer.

In this embodiment, the anode catalytic layer does not have a water holding property; however, a carbon-based material of the anode diffusion layer is processed to be hydrophilic, and that carbon particles having water absorption amount at saturated water vapor pressure at 60°C of not less than 150 cc/g, are contained. Therefore, water absorption ratio of the anode diffusion layer at 60°C is in a range of 40 to 85%, and the anode diffusion layer has high water holding property. In the case in which fuel runs short, water is supplied from the anode diffusion layer to the anode catalytic layer, the water is electrolyzed in the anode catalytic layer, and protons are supplied to the polymer electrolyte membrane.

Furthermore, in a membrane electrode assembly for polymer electrolyte fuel cell of another desirable embodiment of the present invention, having a polymer electrolyte membrane, and an anode and a cathode both having catalytic layers and diffusion layers:

the catalytic layers have at least catalyst, carbon particles supporting the catalyst, and polymer electrolyte;
the cathode catalytic layer contains void forming agent;
the diffusion layers have a layer containing carbon particles and fluorine resin on carbon-based material;
the carbon particles in the anode diffusion layer has water absorption amount at saturated water vapor pressure at 60°C of not less than 150 cc/g; the carbon particles in the cathode diffusion layer has water absorption amount at saturated water vapor pressure at 60°C of not more than 150 cc/g;

water absorption ratio of the anode diffusion layer at 60°C is in a range of 40 to 85%,

differential pressure of the anode diffusion layer and the cathode diffusion layer measured by a differential pressure measuring method is in a range of 60 to 120 mmaq;

penetration resistance measured by a penetration resistance method is not more than 5 mΩ; and

ratio of quantity of electric charge of catalytic material of the cathode catalytic layer existing in proton conductive passage from the polymer electrolyte membrane measured by a cyclic voltammetric method is not less than 15% to the quantity of electric charge of all the catalytic material existing in the cathode catalytic layer.

In this embodiment, carbon particles having water absorption amount at saturated water vapor pressure at 60°C of not less than 150 cc/g, are contained in the anode diffusion layer, carbon particles having water absorption amount at saturated water vapor pressure at 60°C of not more than 150 cc/g, are contained in the cathode diffusion layer, and water absorption ratio of the anode diffusion layer at 60°C is in a range of 40 to 85%. Therefore, amount of water of reverse diffusion from the cathode to the anode is increased, and water holding property of the anode diffusion layer is high. In the case in which fuel runs short, water is supplied from the anode diffusion layer to the anode catalytic layer, the water is electrolyzed in the anode catalytic layer, protons are supplied to the polymer electrolyte membrane.

Furthermore, in a membrane electrode assembly for polymer electrolyte fuel cell of another desirable embodiment of the present invention, carbon-based material of the anode diffusion layer is processed to be hydrophilic and to have a contact angle with water of not more than 90°, and carbon-based material of the cathode diffusion layer is processed to be hydrophobic and to have a contact angle with water of not less than 130°. In this embodiment, the anode diffusion layer can have high water holding property, reverse diffusion of generated water and supplied water from the cathode to the anode can be performed efficiently, electrolysis of water in the anode catalytic layer can be promoted, and corrosion reaction of carbon can be restrained more.

In the membrane electrode assembly for polymer electrolyte fuel cell of the present invention, since constituent elements except for the cathode catalytic layer, cathode diffusion layer, and anode diffusion layer are not limited in particular, these constituent elements are explained below.

The anode diffusion layer of membrane electrode assembly for polymer electrolyte fuel cell of the first and second embodiments of the present invention, can be consist of (1) carbon-based material, (2) a layer containing carbon particles and fluorine resin arranged thereon, and (3) a layer containing carbon particles, polymer electrolyte, void forming agent, and water holding material further arranged thereon. Alternatively, it can be consist of (1) carbon-based material and (2) a layer containing carbon particles, fluorine resin, and water holding material arranged thereon.

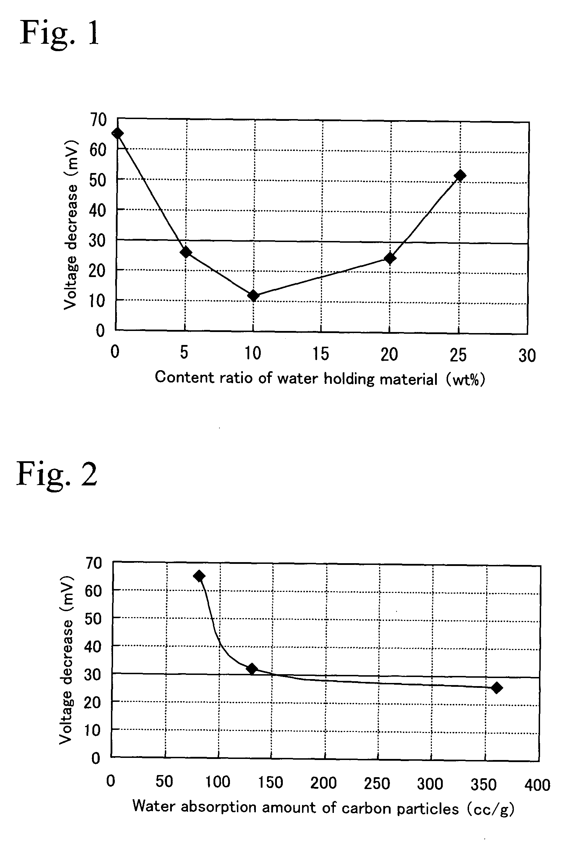

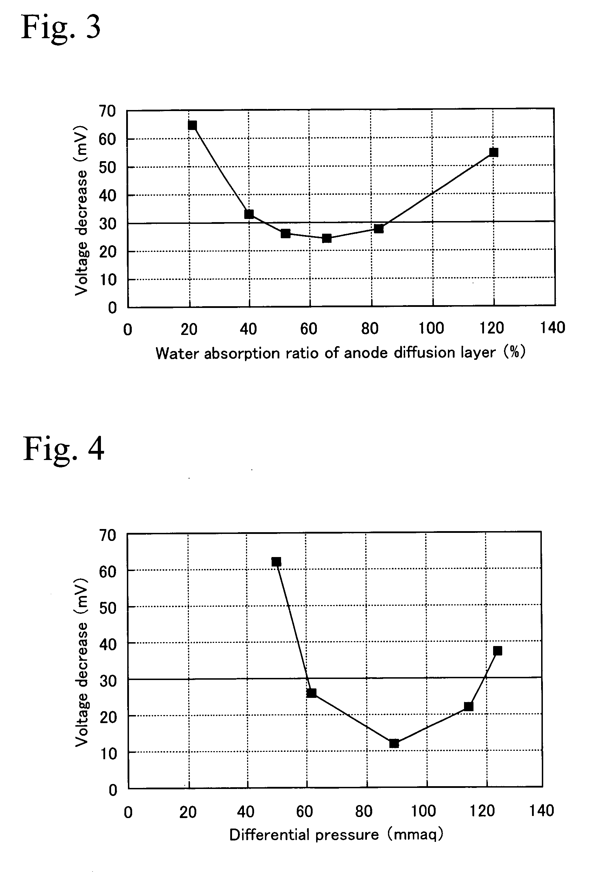

Furthermore, the anode diffusion layer of the present invention is required to have water absorption ratio at 60°C in a range of 40 to 85% by arranging water holding layer containing 5 to 20 wt% of water holding material which increases water holding property to the total amount of electron conductive material and water holding material, on the carbon-based material, or by containing carbon particles having water absorption amount at saturated water vapor pressure at 60°C of not less than 150 cc/g. Fig. 1 is a graph showing a relationship of content ratio of the water holding material to the total amount of electron conductive material and water holding material, and voltage decrease. Fig. 2 is a graph showing a relationship of water absorption amount of carbon particles and voltage decrease. As is clear from these figures, if the content ratio of the water holding material is in a range of 5 to 20 wt%, or if the water absorption amount of the carbon particles is not less than 150 cc/g, voltage decrease is not more than 30 mV, and desirable voltage efficiency is exhibited. Fig. 3 is a graph showing a relationship of water absorption ratio of the anode diffusion layer at 60°C and voltage decrease. As is clear from Fig. 3, if the water absorption ratio of the anode diffusion layer is in a range of 40 to 85%, voltage decrease is not more than 30 mV, and desirable voltage efficiency is exhibited. On the other hand, if the content amount of the water holding material or water absorption amount of the carbon particles are below the range mentioned above, water absorption ratio of the anode diffusion layer is too low, and the above-mentioned effect cannot be obtained. If the content amount of the water holding material or water absorption amount of the carbon particles are above the range mentioned above, water absorption ratio of the anode diffusion layer is too high, gas supplying property is deteriorated by flooding phenomenon, and fuel shortage area is increased. As the water holding material of the present invention, oxides such as zeolite, γ-alumina, or silica can be used.

In the present invention, differential pressure measured by a differential pressure measuring method must be in a range of 60 to 120 mmaq. Fig. 4 is a graph showing a relationship of differential pressure of the anode diffusion layer and voltage decrease. As is clear from Fig. 4, if the differential pressure of the anode diffusion layer is in a range of 60 to 120 mmaq, voltage decrease is not more than 30 mV, and desirable voltage efficiency is exhibited. On the other hand, if the differential pressure is above 120 mmaq, gas supplying property is deteriorated, and fuel shortage area is increased. If the differential pressure is below 60 mmaq, supplying protons only by electrolysis of water is not sufficient since the water exhausting property is high, and corrosion reaction of carbon material in the anode is promoted. The differential pressure measuring method mentioned herein is a method in which anode diffusion layer is set and held at mid-stream of a gas flow passage, a pre-determined flow amount of reaction gas is flowed, pressures in front of and behind the anode diffusion layer are measured, and the difference in the pressures is calculated.

Furthermore, if adhesion of the polymer electrolyte membrane and the anode catalytic layer is not sufficient, protons generated by electrolysis of water cannot be supplied to the polymer electrolyte membrane appropriately. Therefore, in the present invention, appropriate degree of adhesion is expressed by a measured value of the cyclic voltammetric method. That is, adhesion ratio in the present invention is defined by the following formula.

Adhesion ratio (%) = (Measured value by cyclic voltammetric method under condition of one side humidified) / (Measured value by cyclic voltammetric method under condition of both side humidified) x 100

The cyclic voltammetric method under conditions of both sides humidified as mentioned herein is a method in which humidified gas is supplied to both anode and cathode to humidify the entire electrode assembly and the amount of electric charge of all the catalytic material of all of the electrode catalytic layer depending on electrochemical surface area is measured.

On the other hand, the cyclic voltammetric method under conditions of one side humidified as mentioned herein is a method in which humidified gas is supplied only from the anode, the water supplied from the anode is dispersed only to conductive passages of the polymer membrane of the cathode side, and the amount of electric charge of the catalytic material of the cathode catalytic layer existing from the polymer electrolyte membrane to proton conductive passages depending on electrochemical surface area is measured. If the amount of the catalytic material of the cathode catalytic layer existing from the polymer electrolyte membrane to proton conductive passages becomes larger, the adhesion ratio becomes larger and the catalytic material is effectively used.

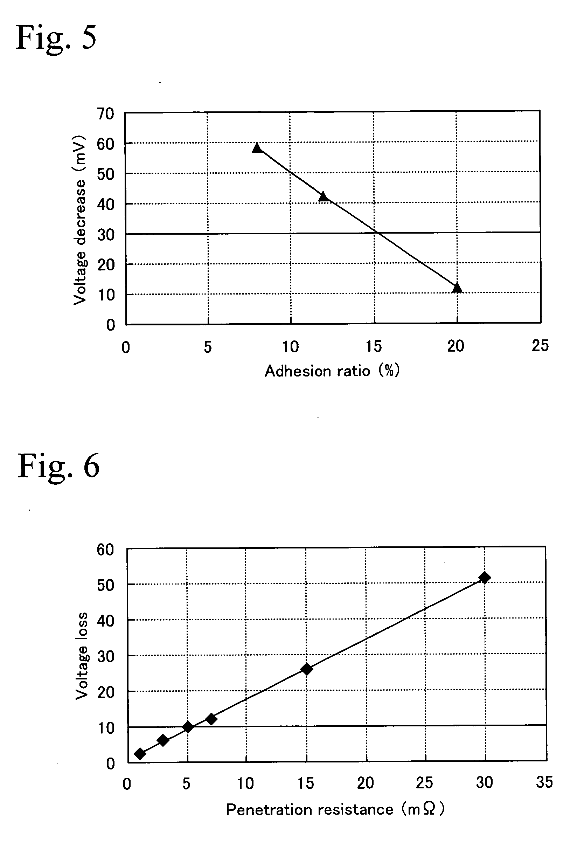

Fig. 5 is a graph showing a relationship of adhesion ratio and voltage decrease. As is clear from Fig. 5, if the adhesion ratio is not less than 15%, voltage decrease is not more than 30 mV, and desirable voltage efficiency is exhibited. Therefore, in the present invention, it is necessary that the ratio of quantity of electric charge of catalytic material of the cathode catalytic layer existing in proton conductive passage from the polymer electrolyte membrane measured by the cyclic voltammetric method be not less than 15% of the quantity of electric charge of all of the catalytic material existing in the cathode catalytic layer.

In the electrode assembly of the present invention, it is desirable that a resistance overvoltage loss at 1 A/cm² be less than 10 mV. Fig. 6 is a graph showing the relationship of penetration resistance and voltage loss at 1 A/cm². As is clear from Fig. 6, if the penetration resistance is not more than 5 mΩ, the voltage loss at 1 A/cm² is less than 10 mV, and desirable voltage efficiency is exhibited.

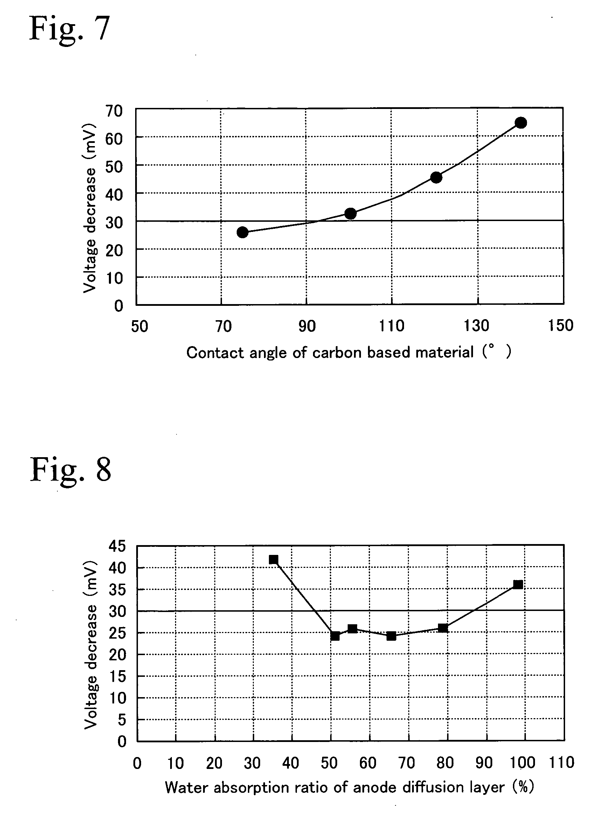

Furthermore, carbon-based material of the anode diffusion layer in third embodiment is limited to the carbon material which is processed to be hydrophilic and not more than 90° of contact angle with water. It is necessary to prepare water absorption ratio of the anode diffusion layer at 60°C in a range of 40 to 85% by arranging a layer having fluorine resin and carbon particles whose water absorption amount at saturated water vapor pressure at 60°C is not less than 150 cc/g, on this carbon-based material. Fig.7 is a graph showing a relationship of contact angle of the carbon-based material with water and voltage decrease. As is clear from Figs. 7 and 2, if the contact angle of carbon-based material with water is not more than 90° and if the water absorption amount of the carbon particles is not less than 150 cc/g, voltage decrease is not more than 30 mV, desirable voltage efficiency is exhibited. Fig. 8 is a graph showing a relationship of water absorption ratio of the anode diffusion layer at 60°C and the voltage decrease. Also in this embodiment, as is clear from Fig. 8, if the water absorption ratio of the anode diffusion layer is in a range of 40 to 85%, voltage decrease is not more than 30 mV, desirable voltage efficiency is exhibited. However, if the contact angle of the carbon-based material is above the range, water absorbed in the anode diffusion layer goes to the anode catalytic layer, flooding phenomenon occurs in the anode catalytic layer, gas supplying property is deteriorated, and area of fuel shortage under fuel shortage conditions is enlarged. If the water absorption amount of the carbon particles is below the range, the effect of the present invention cannot be obtained since the water absorption ratio is too low.

On the other hand, the water absorption amount of the carbon particles is above the range, gas supplying property is deteriorated by the flooding phenomenon and area of fuel shortage under fuel shortage conditions is enlarged since the water absorption ratio of the anode diffusion layer is too high.

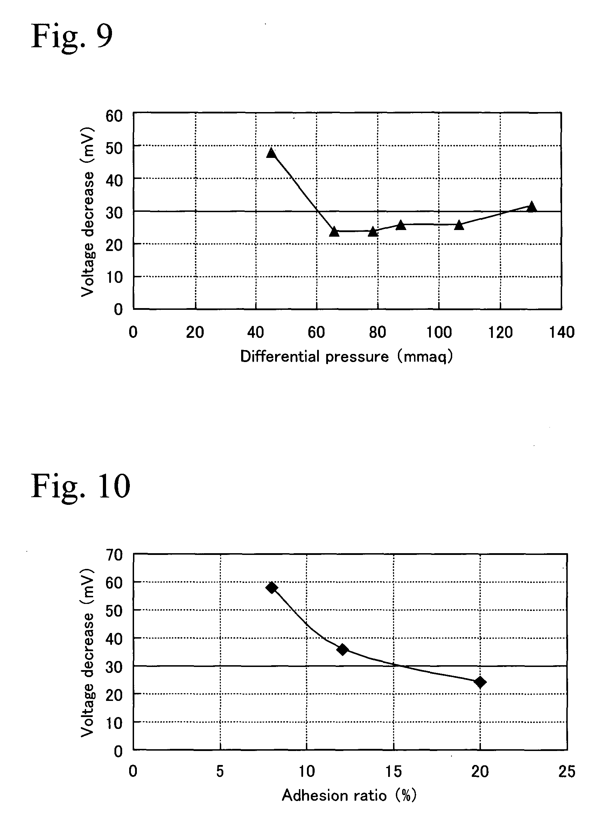

Also, in this embodiment, according to the same reason mentioned above, it is necessary that the differential pressure measured by the differential pressure measuring method be in a range from 60 to 120 mmaq. Fig. 9 is a graph showing a relationship of the differential pressure of the anode diffusion layer and the voltage decrease.

Fig. 10 is a graph showing a relationship of adhesion ratio and the voltage decrease in this embodiment. As is clear from Fig. 10, if the adhesion ratio is not less than 15%, the voltage decrease is not more than 30 mV, desirable voltage efficiency is exhibited. Therefore, in the present invention, it is necessary that the ratio of the quantity of electric charge of catalytic material of the cathode catalytic layer existing in proton conductive passage from the polymer electrolyte membrane measured by a cyclic voltammetric method be not less than 15% to the quantity of electric charge of all the catalytic material existing in the cathode catalytic layer.

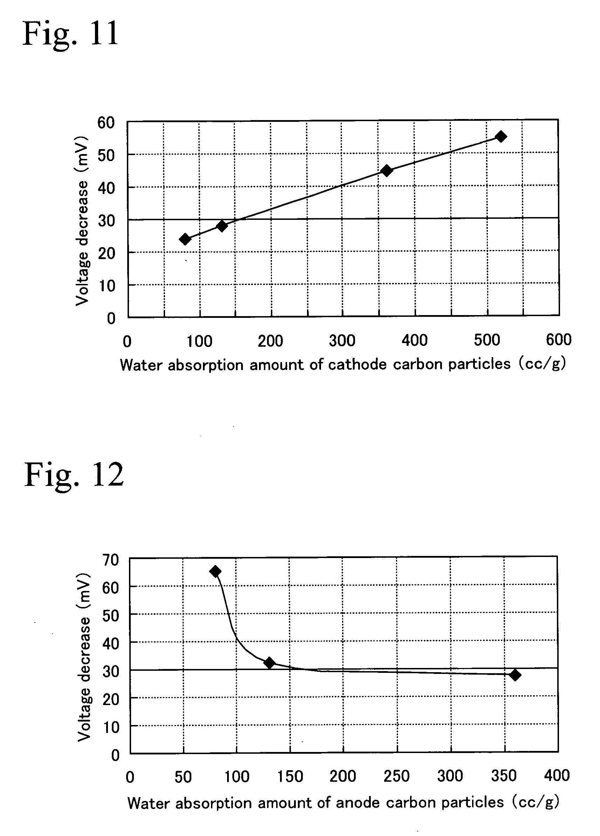

In an electrode assembly for the polymer electrolyte fuel cell of the forth embodiment of the present invention, void forming agent is added to the cathode catalytic layer to prevent flooding in the cathode catalytic layer, and water-repellant carbon particles are used in the cathode diffusion layer to supply water which is generated in the cathode or supplied from outside, to the anode side smoothly by reverse diffusion. It is necessary that this water repellant carbon particle have water absorption amount at saturated water vapor pressure at 60°C of less than 150 cc/g. Fig. 11 is a graph showing a relationship of water absorption amount of the carbon particles in the cathode diffusion layer of this embodiment and voltage decrease. As is clear from Fig. 11, if the water absorption amount of the carbon particles in the cathode diffusion layer is less than 150 cc/g, voltage decrease is not more than 30 mV, desirable voltage efficiency is exhibited.

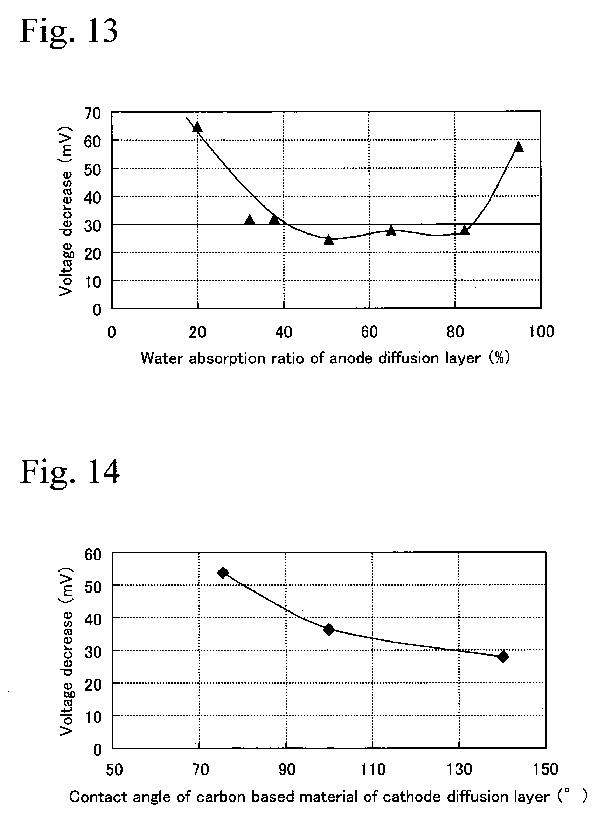

Since hydrophilic carbon particles are used in the anode diffusion layer of this embodiment, water can be retained. In the case in which fuel is in short supply, the retained water is supplied to the anode catalytic layer to promote electrolysis of water, generated protons are supplied to electrolyte membrane, and reverse diffusion water from the cathode side can also be used in the electrolysis of water in the anode catalytic layer. In this way, corrosion of carbon which is a next step of the electrolysis of water is difficult to occur. It is necessary that the hydrophilic carbon particle have water absorption amount at saturated water vapor pressure at 60°C of not less than 150 cc/g. Fig. 12 is a graph showing a relationship of water absorption amount of carbon particles in the anode diffusion layer of this embodiment and voltage decrease. As is clear from Fig. 12, if the water absorption amount of the carbon particles in the anode diffusion layer is not less than 150 cc/g, voltage decrease is not more than 30 mV, desirable voltage efficiency is exhibited. Furthermore, it is necessary that the anode diffusion layer having high water holding property by adding the hydrophilic carbon particles have water absorption ratio at 60°C in a range of 40 to 85%. Fig. 13 is a graph showing a relationship of water absorption ratio of the anode diffusion layer of this embodiment at 60°C and voltage decrease. As is clear from Fig. 13, also in this embodiment, if the water absorption ratio of the anode diffusion layer is in a range of 40 to 85%, voltage decrease is not more than 30 mV, desirable voltage efficiency is exhibited.

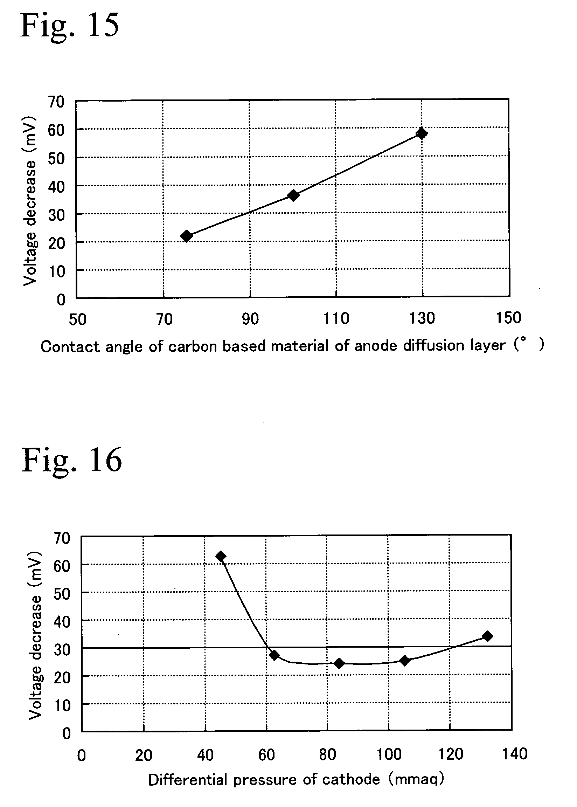

It is desirable that the carbon-based material of the cathode diffusion layer of this embodiment be processed to be water-repellent and to have a contact angle with water of not less than 130°, and it is desirable that the carbon-based material of the anode diffusion layer be processed to have a contact angle with water of not more than 90°. In this way, balance of water holding property of the cathode and anode can be controlled, that is, not only can water be contained in the anode diffusion layer but also generated water in the cathode migrate to the anode to utilize the reverse diffusion water efficiently. In this way, electrolysis of water in the anode catalytic layer can be promoted more efficiently, to improve restraining effect of carbon corrosion reaction. Fig. 14 is a graph showing a relationship of contact angle of the carbon-based material with water in the cathode diffusion layer and voltage decrease, and Fig. 15 is a graph showing a relationship of contact angle of the carbon-based material with water in the anode diffusion layer and voltage decrease. As is clear from these Figs. 14 and 15, if the contact angle of the carbon-based material of the cathode diffusion layer is not less than 130° or if the contact angle of the carbon-based material of the anode diffusion layer is not more than 90°, voltage decrease is not more than 30 mV, and desirable voltage efficiency is exhibited. However, if the contact angle of the carbon-based material of the cathode diffusion layer is less than 130°, flooding phenomenon occurs by the generated water in the cathode, reducing gas supplying property, and area of fuel shortage under fuel shortage conditions is enlarged. On the other hand, if the contact angle of the carbon-based material of the anode diffusion layer is more than 90°, water absorbed in the anode diffusion layer is migrated to the anode catalytic layer, flooding phenomenon occurs in the anode catalytic layer, reducing gas supplying property, and area of fuel shortage under fuel shortage conditions is enlarged.

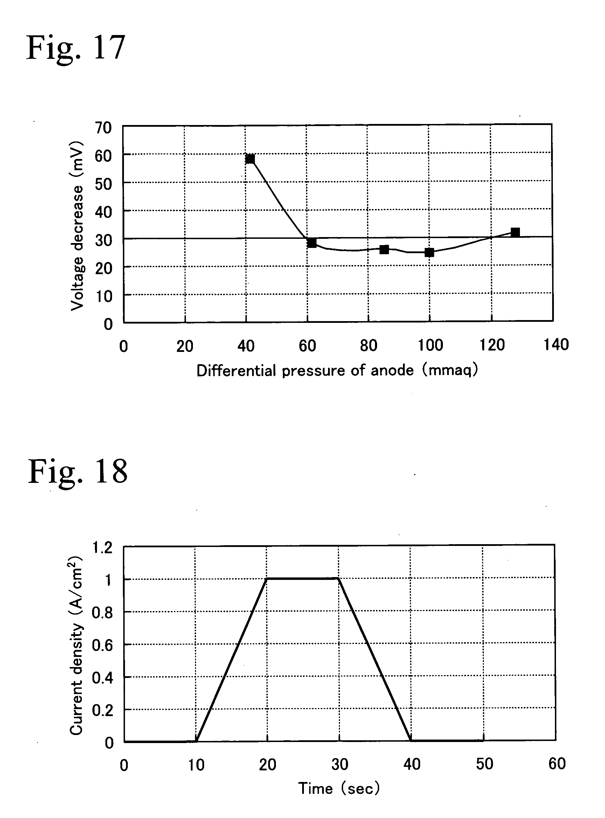

Also in this embodiment, differential pressure of the cathode and anode measured by the differential pressure method must be in a range of 60 to 120 mmaq. Fig. 16 is a graph showing a relationship of the differential pressure of the cathode diffusion layer and voltage decrease, and Fig. 17 is a graph showing a relationship of the differential pressure of the anode diffusion layer and voltage decrease. As is clear from Figs. 16 and 17, if the differential pressure of the cathode diffusion layer and the anode diffusion layer is in a range of 60 to 120 mmaq, voltage decrease is not more than 30 mV, and desirable voltage efficiency is exhibited. The differential pressures of the anode diffusion layer and the cathode diffusion layer are closely associated with each other; for example, even if the water absorption ratio of anode diffusion layer at 60°C is in an appropriate range, gas diffusion water amount cannot be efficiently controlled in the case in which the differential pressure of the cathode diffusion layer is not in an appropriate range.

Furthermore, if adhesion property of the polymer electrolyte membrane and the cathode catalytic layer is not sufficient, the above-mentioned reverse diffusion water cannot be supplied appropriately, and if adhesion property of the polymer electrolyte membrane and the anode catalytic layer is not sufficient, protons generated by electrolysis of water cannot be supplied to the polymer electrolyte membrane appropriately. Therefore, in the present invention, the degree of appropriate adhesion property is expressed by a measured value by the cyclic voltammetric method.

Fig. 10 is a graph showing a relationship of adhesion ratio and voltage decrease. As is clear from Fig. 10, if the adhesion ratio is not less than 15%, voltage decrease is not more than 30 mV, and desirable voltage efficiency is exhibited. Therefore, in the present invention, it is necessary that the ratio of quantity of electric charge of catalytic material of the cathode catalytic layer existing in proton conductive passage from the polymer electrolyte membrane measured by a cyclic voltammetric method be not less than 15% to the quantity of electric charge of all the catalytic material existing in the cathode catalytic layer.

BRIEF DESCRIPTION OF DRAWINGS

Fig. 1 is a graph showing a relationship of content ratio of water holding material to the total amount of electron conductive material and the water holding material and voltage decrease in the first and second embodiments.
Fig. 2 is a graph showing a relationship of water absorption amount of carbon particles and voltage decrease in the first, second, and third embodiments.
Fig. 3 is a graph showing a relationship of water absorption ratio of anode diffusion layer at 60°C and voltage decrease in the first and second embodiments.
Fig. 4 is a graph showing a relationship of differential pressure of the anode diffusion layer and voltage decrease in the first and second embodiments.
Fig. 5 is a graph showing a relationship of adhesion ratio and voltage decrease in the first and second embodiments.
Fig. 6 is a graph showing a relationship of penetration resistance and voltage loss at 1 A/cm$^2$ in the first and second embodiments.
Fig. 7 is a graph showing a relationship of contact angle of carbon-based material with water and voltage decrease in the first and second embodiments.
Fig. 8 is a graph showing a relationship of water absorption ratio of the anode diffusion layer at 60°C and voltage decrease in the third embodiment.
Fig. 9 is a graph showing a relationship of differential pressure of the anode diffusion layer and voltage decrease in the third embodiment.
Fig. 10 is a graph showing a relationship of adhesion ratio and voltage decrease in the third and fourth embodiments.
Fig. 11 is a graph showing a relationship of water absorption amount of carbon particles in the cathode diffusion layer and voltage decrease in the fourth embodiment.
Fig. 12 is a graph showing a relationship of water absorption amount of carbon particles in the anode diffusion layer and voltage decrease in the fourth embodiment.
Fig. 13 is a graph showing a relationship of water absorption ratio in the anode diffusion layer at 60°C and voltage decrease in the fourth embodiment.
Fig. 14 is a graph showing a relationship of contact angle of carbon-based material with water in the cathode diffusion layer and voltage decrease in the fourth embodiment.
Fig. 15 is a graph showing a relationship of contact angle of carbon-based material with water in the anode diffusion layer and voltage decrease in the fourth embodiment.
Fig. 16 is a graph showing a relationship of differential pressure of the cathode diffusion layer and voltage decrease in the fourth embodiment.
Fig. 17 is a graph showing a relationship of differential pressure of the anode diffusion layer and voltage decrease in the fourth embodiment.
Fig. 18 is a graph showing a change of current density with time at a fuel shortage test.

EXAMPLES

The electrode assembly for polymer electrolyte fuel cell of the present invention is further explained by way of Examples and Comparative Examples.

A. First Embodiment

First, an embodiment in which a water holding layer is arranged on the anode diffusion layer, is explained. The water holding layer includes carbon-based material and 5 to 20 wt% of water holding material to the total amount of electron conductive material and the water holding material.

1. Preparation of Electrode Assembly

Example 1

35 g of ion conductive polymer (trade name: Nafion SE20192, produced by Du Pont), 10 g of platinum supporting carbon particles in which the weight ratio of carbon black to platinum is 50:50 (trade name: TEC10E50E, produced by Tanaka Kikinzoku Kogyo K. K.), and 2.5 g of crystalline carbon fiber (trade name: VGCF, produced by Showa Denko) were mixed to prepare cathode catalytic paste. This cathode catalytic paste was coated on a FEP sheet so that the Pt amount is 0.3 mg/cm$^2$, and was dried to prepare a cathode electrode sheet. On the other hand, 36.8 g of ion conductive polymer (trade name: Nafion SE20192, produced by Du Pont) and 10 g of Pt-Ru supporting carbon particles in which weight ratio of the carbon black and the catalyst is 46:54 (trade name: TEC61E54, Pt:Ru=1:1, Tanaka Kikinzoku Kogyo K. K.) were mixed to prepare an anode catalytic paste. This anode catalytic paste was coated to a FEP sheet so that catalyst amount is 0.15 mg/cm$^2$, and dried to prepare an anode electrode sheet.

25 g of ion conductive polymer (trade name: Nafion SE20192, produced by Du Pont), 4.5 g of carbon black (trade name: Vulcan XC75, produced by Cabot), 2.5 g of crystalline carbon fiber (trade name: VGCF, produced by Showa Denko), and 0.5 g of ZSM5 (produced by Tosoh Corporation) were mixed to prepare a foundation paste A1. 12 g of Teflon (trademark) powder (trade name: L170J, produced by Asahi Glass Co., Ltd.) and 18 g of carbon black powder (trade name: Vulcan XC75, produced by Cabot) were mixed with ethylene glycol to prepare a foundation paste B1. Next, the foundation paste B1 was coated on a carbon paper (trade name: TGP060, produced by Toray Industries Inc.) which was beforehand process to be water-repellant so as to be 2.3 mg/cm$^2$, the foundation paste A1 was coated so as to be 0.3 mg/cm$^2$, and dried, to prepare an anode diffusion layer. On the other hand, only the foundation paste B1 was coated on the same carbon paper so as to be 2.3 mg/cm$^2$, and was dried to obtain a cathode diffusion layer.

The electrode sheets of the anode and cathode are transferred to an electrolyte membrane by a decal method (unifying pressure of 40 kg/cm$^2$) to prepare membrane electrode assembly CCM. The anode diffusion layer and the cathode diffusion layer mentioned above, were layered on both sides of the CCM to form electrode assembly MEA of Example 1.

Example 2

Except that a foundation paste A2 was used instead of the foundation paste A1, a membrane electrode assembly MEA of Example 2 was prepared in a manner similar to that of Example 1. It should be noted that the foundation paste A2 was prepared by mixing 25 g of ion conductive polymer (trade name: Nafion SE20192, produced by Du Pont), 4.0 g of carbon black powder (trade name: Vulcan XC75, produced by Cabot), 2.5 g of crystalline carbon fiber (trade name: VGCF, produced by Showa Denko), and 1 g of ZSM5 (produced by Tosoh Corporation).

Example 3

Except that a foundation paste A3 was used instead of the foundation paste A1, a membrane electrode assembly MEA of Example 3 was prepared in a manner similar to that of Example 1. It should be noted that the foundation paste A3 was prepared by mixing 25 g of ion conductive polymer (trade name: Nafion SE20192, produced by Du Pont), 4.75 g of carbon black powder (trade name: Vulcan XC75, produced by Cabot), 2.5 g of crystalline carbon fiber (trade name: VGCF, produced by Showa Denko), and 0.25 g of ZSM5 (produced by Tosoh Corporation).

Example 4

Except that a foundation paste A4 was used instead of the foundation paste A1, a membrane electrode assembly MEA of Example 4 was prepared in a manner similar to that of Example 1. It should be noted that the foundation paste A4 was prepared by mixing 25 g of ion conductive polymer (trade name: Nafion SE20192, produced by Du Pont), 4.5 g of carbon black powder (trade name: Vulcan XC75, produced by Cabot), and 0.5 g of ZSM5 (produced by Tosoh Corporation).

Example 5

Except that an anode diffusion layer in which a foundation paste B2 was coated on a carbon paper (trade name: TP060, produced by Toray Industries Inc.) beforehand treated to be water-repellent and dried so as to be 2.3 mg/cm$^2$, was used instead of the anode diffusion layer of Example 1, a membrane electrode assembly MEA of Example 5 was prepared in a manner similar to that of Example 1. It should be noted that the foundation paste B2 was prepared by mixing 12 g of Teflon (trademark) powder (trade name: L170J, produced by Asahi Glass Co., Ltd.), 16.2 g of carbon black powder (trade name: Vulcan XC75, produced by Cabot), and 1.8 g of ZSM5 (produced by Tosoh Corporation) with ethylene glycol.

Comparative Example 1

Except that a foundation paste A5 was used instead of the foundation paste A1, a membrane electrode assembly MEA of Comparative Example 1 was prepared in a manner similar to that of Example 1. It should be noted that the foundation paste A5 was prepared by mixing 25 g of ion conductive polymer (trade name: Nafion SE20192, produced by Du Pont), 3.75 g of carbon black powder (trade name: Vulcan XC75, produced by Cabot), 2.5 g of crystalline carbon fiber (trade name: VGCF, produced by Showa Denko), and 1.25 g of ZSM5 (produced by Tosoh Corporation).

Comparative Example 2

Except that a foundation paste A6 was used instead of the foundation paste A1, a membrane electrode assembly MEA of Comparative Example 2 was prepared in a manner similar to that of Example 1. It should be noted that the foundation paste A6 was prepared by mixing 30 g of ion conductive polymer (trade name: Nafion SE20192, produced by Du Pont), 4.5 g of carbon black powder (trade name: Vulcan XC75, produced by Cabot), and 0.5 g of ZSM5 (produced by Tosoh Corporation).

Comparative Example 3

Except that a foundation paste A7 was used instead of the foundation paste A1, a membrane electrode assembly MEA of Comparative Example 3 was prepared in a manner similar to that of Example 1. It should be noted that the foundation paste A7 was prepared by mixing 35 g of ion conductive polymer (trade name: Nafion SE20192, produced by Du Pont), 4.5 g of carbon black powder (trade name: Vulcan XC75, produced by Cabot), and 0.5 g of ZSM5 (produced by Tosoh Corporation).

Comparative Example 4

Except that a foundation paste A8 was used instead of the foundation paste A1, a membrane electrode assembly MEA of Comparative Example 4 was prepared in a manner similar to that of Example 1. It should be noted that the foundation paste A8 was prepared by mixing 25 g of ion conductive polymer (trade name: Nafion SE20192, produced by Du Pont), 5 g of carbon black powder (trade name: Vulcan XC75, produced by Cabot), and 2.5 g of crystalline carbon fiber (trade name: VGCF, produced by Showa Denko).

Comparative Example 5

Except that a foundation paste A9 was used instead of the foundation paste A1, a membrane electrode assembly MEA of Comparative Example 5 was prepared in a manner similar to that of Example 1. It should be noted that the foundation paste A9 was prepared by mixing 25 g of ion conductive polymer (trade name: Nafion SE20192, produced by Du Pont), 4.5 g of carbon black powder (trade name: Vulcan XC75, produced by Cabot), 1.5 g of crystalline carbon fiber (trade name: VGCF, produced by Showa Denko), and 0.5 g of ZSM5 (produced by Tosoh Corporation).

Comparative Example 6

Except that a foundation paste A10 was used instead of the foundation paste A1, a membrane electrode assembly MEA of Comparative Example 6 was prepared in a manner similar to that of Example 1. It should be noted that the foundation paste A10 was prepared by mixing 25 g of ion conductive polymer (trade name: Nafion SE20192, produced by Du Pont), 4.5 g of carbon black powder (trade name: Vulcan XC75, produced by Cabot), 3.5 g of crystalline carbon fiber (trade name: VGCF, produced by Showa Denko), and 0.5 g of ZSM5 (produced by Tosoh Corporation).

Comparative Example 7

Except that the unifying pressure of the decal method in the production of the membrane electrode assembly CCM was 30 kg/cm$^2$, a membrane electrode assembly MEA of Comparative Example 7 was prepared in a manner similar to that of Example 1.

Comparative Example 8

Except that the unifying pressure of the decal method in the production of the membrane electrode assembly CCM was 10 kg/cm$^2$, a membrane electrode assembly of Comparative Example 8 was prepared in a manner similar to that of Example 1.

2. Fuel Shortage Test

A fuel shortage test was performed on fuel cells containing membrane electrode assemblies of Examples and Comparative Examples mentioned above. The test conditions were as follows: cell temperature: 80°C, humidity amount: 45 RH% in the anode and 85 RH% in the cathode, utilization ratio at 0.5 A/cm$^2$: 100% in the anode and 60% in the cathode. Current density of the test was changed from 0 to 1 A/cm$^2$ over time as shown in Fig. 18, and this change was repeated 500 times. A difference of voltage calculated by terminal voltages before and after the fuel test is shown in Table 1.

Table 1

| | Content ratio of water holding material (wt%) | Water absorption ratio of anode diffusion layer (wt%) | Differential pressure (mmaq) | Adhesion ratio (%) | Penetration resistance (mΩ) | Δ voltage (mV) |
|---|---|---|---|---|---|---|
| Example 1 | 10 | 65 | 90 | 20 | 3.2 | 12 |
| Example 2 | 20 | 75 | 115 | 22 | 3.8 | 27.6 |
| Example 3 | 5 | 46 | 62 | 18 | 2.8 | 25 |
| Example 4 | 10 | 62 | 75 | 19 | 4.4 | 21 |
| Example 5 | 10 | 62 | 78 | 21 | 4.8 | 22 |
| Comparative Example 1 | 25 | 83 | 82 | 23 | 4.4 | 52 |
| Comparative Example 2 | 10 | 90.8 | 70 | 21 | 4.6 | 36 |
| Comparative Example 3 | 10 | 93.9 | 63 | 20 | 4.8 | 43 |
| Comparative Example 4 | 0 | 35 | 30 | 18 | 2.6 | 65 |
| Comparative Example 5 | 10 | 72 | 50 | 16 | 3.8 | 62 |
| Comparative Example 6 | 10 | 76 | 125 | 18 | 4.2 | 37.3 |
| Comparative Example 7 | 10 | 65 | 93 | 12 | 3.4 | 42 |
| Comparative Example 8 | 10 | 65 | 88 | 8 | 4.6 | 58 |

3. Evaluation

The electrode assemblies of Examples 1 to 5 in which content ratio of the water holding material, water absorption ratio of the anode diffusion layer, differential pressure, and adhesion ratio are within the range of the present invention, have penetration resistance of not more than 5 mΩ and difference of voltage at the fuel shortage test of not more than 30 mV. Efficiencies were not reduced very much. On the other hand, the electrode assembly of Comparative Example 1 having too high content ratio of water holding material, the electrode assemblies of Comparative Examples 2 and 3 having too high water absorption ratio of the anode diffusion layer, the electrode assembly of Comparative Example 4 having too low content ratio of water holding material, water absorption ratio of the anode diffusion layer and differential pressure, the electrode assembly of Comparative Example 5 having too low differential pressure, the electrode assembly of Comparative Example 6 having too high differential pressure, and the electrode assemblies of Comparative Examples 7 and 8 having too low adhesion ratio, all have penetration resistance of not more than 5 mΩ; however, difference of voltage in the fuel shortage test exceeds more than 30 mV. Efficiencies were reduced very much.

B. Second Embodiment

Next, an embodiment in which carbon particles having water absorption amount at saturated water vapor pressure at 60°C of not less than 150 cc/g are contained in the anode diffusion layer, is explained.

1. Preparation of Electrode Assembly

Example 6

Except that a foundation paste A11 was used instead of the foundation paste A1, a membrane electrode assembly MEA of Example 6 was prepared in a manner similar to that of Example 1. It should be noted that the foundation paste A11 was prepared by mixing 25 g of ion conductive polymer (trade name: Nafion SE20192, produced by Du Pont), 5 g of carbon black powder (trade name: Ketjen black, produced by Cabot), and 2.5 g of crystalline carbon fiber (trade name: VGCF, produced by Showa Denko).

Example 7

Except that a foundation paste A12 was used instead of the foundation paste A1, a membrane electrode assembly MEA of Example 7 was prepared in a manner similar to that of Example 1. It should be noted that the foundation paste A12 was prepared by mixing 25 g of ion conductive polymer (trade name: Nafion SE20192, produced by Du Pont), and 5 g of carbon black powder (trade name: Ketjen black, produced by Cabot).

Example 8

Except that an anode diffusion layer in which a foundation paste A13 was coated on a carbon paper (trade name: TP060, produced by Toray Industries Inc.) treated beforehand to be water-repellent and dried so as to be 2.3 mg/cm$^2$, is used instead of the anode diffusion layer of Example 1, a membrane electrode assembly MEA of Example 8 was prepared in a manner similar to that of Example 1. It should be noted that the foundation paste A13 was prepared by mixing 12 g of Teflon (trademark) dispersion (trade name: L170J, produced by Asahi Glass Co., Ltd.), and 18 g of carbon black powder (trade name: Ketjen black, produced by Cabot).

Comparative Example 9

Except that a foundation paste A14 was used instead of the foundation paste A1, a membrane electrode assembly MEA of Comparative Example 9 was prepared in a manner similar to that of Example 1. It should be noted that the foundation paste A14 was prepared by mixing 25 g of ion conductive polymer (trade name: Nafion SE20192, produced by Du Pont), 5 g of carbon black powder (trade name: AB-5, produced by Cabot), and 2.5 g of crystalline carbon fiber (trade name: VGCF, produced by Showa Denko).

Comparative Example 10

Except that a foundation paste A15 was used instead of the foundation paste A1, a membrane electrode assembly MEA of Comparative Example 10 was prepared in a manner similar to that of Example 1. It should be noted that the foundation paste A15 was prepared by mixing 25 g of ion conductive polymer (trade name: Nafion SE20192, produced by Du Pont), 5 g of carbon black powder (trade name: Vulcan XC75, produced by Denka), and 2.5 g of crystalline carbon fiber (trade name: VGCF, produced by Showa Denko).

Comparative Example 11

Except that a foundation paste A16 was used instead of the foundation paste A1, a membrane electrode assembly MEA of Comparative Example 11 was prepared in a manner similar to that of Example 1. It should be noted that the foundation paste A16 was prepared by mixing 18 g of ion conductive polymer (trade name: Nafion SE20192, produced by Du Pont), 5 g of carbon black powder (trade name: Ketjen black, produced by Cabot), and 3.5 g of crystalline carbon fiber (trade name: VGCF, produced by Showa Denko).

Comparative Example 12

Except that a foundation paste A17 was used instead of the foundation paste A1, a membrane electrode assembly MEA of Comparative Example 12 was prepared in a manner similar to that of Example 1. It should be noted that the foundation paste A17 was prepared by mixing 25 g of ion conductive polymer (trade name: Nafion SE20192, produced by Du Pont), 5 g of carbon black powder (trade name: Ketjen black, produced by Cabot), and 3.5 g of crystalline carbon fiber (trade name: VGCF, produced by Showa Denko).

Comparative Example 13

Except that a foundation paste A18 was used instead of the foundation paste A1, a membrane electrode assembly MEA of Comparative Example 13 was prepared in a manner similar to that of Example 1. It should be noted that the foundation paste A18 was prepared by mixing 30 g of ion conductive polymer (trade name: Nafion SE20192, produced by Du Pont), 5 g of carbon black powder (trade name: Ketjen black, produced by Cabot), and 1 g of crystalline carbon fiber (trade name: VGCF, produced by Showa Denko).

Comparative Example 14

Except that the unifying pressure of the decal method in the production of the membrane electrode assembly CCM was 30 kg/cm$^2$, a membrane electrode assembly MEA of Comparative Example 14 was prepared in a manner similar to that of Example 6.

Comparative Example 15

Except that the unifying pressure of the decal method in the production of the membrane electrode assembly CCM was 10 kg/cm$^2$, a membrane electrode assembly MEA of Comparative Example 15 was prepared in a manner similar to that of Example 6.

2. Fuel Shortage Test

A fuel shortage test was performed about fuel cells containing membrane electrode assemblies of Examples and Comparative Examples mentioned above. The test conditions were the same as the test of the first embodiment described above. A difference of voltage calculated by terminal voltages before and after the fuel test is shown in Table 2.

Table 2

| | Water absorption amount of carbon particles (cc/g) | Water absorption ratio of anode diffusion layer (wt%) | Differential pressure (mmaq) | Adhesion ratio (%) | Penetration resistance (mΩ) | Δ voltage (mV) |
|---|---|---|---|---|---|---|
| Example 6 | 360 | 52 | 62 | 20 | 3.2 | 26 |
| Example 7 | 360 | 82 | 115 | 29 | 4.4 | 27.5 |
| Example 8 | 360 | 65 | 78 | 21 | 4.8 | 24 |
| Example 9 | 130 | 40 | 82 | 23 | 4.4 | 32 |
| Comparative Example 10 | 80 | 21 | 70 | 19 | 4.2 | 65 |
| Comparative Example 11 | 360 | 120 | 65 | 22 | 3.2 | 55 |
| Comparative Example 12 | 360 | 78 | 43.8 | 21 | 3.1 | 62 |
| Comparative Example 13 | 360 | 55 | 140 | 20 | 4.8 | 48 |
| Comparative Example 14 | 360 | 65 | 93 | 12 | 3.4 | 35.8 |
| Comparative Example 15 | 360 | 65 | 88 | 8 | 4.6 | 58 |

3. Evaluation

The electrode assemblies of Examples 6 to 8 in which water absorption amount of carbon particles, water absorption ratio of the anode diffusion layer, differential pressure, and adhesion ratio are within the range of the present invention, have penetration resistance of not more than 5 mΩ and difference of voltage at the fuel shortage test of not more than 30 mV. Efficiencies were not deteriorated so much. On the other hand, the electrode assembly of Comparative Example 9 having too high water absorption amount of carbon particles, the electrode assembly of Comparative Example 10 having too low water absorption amount of carbon particles and too low water absorption ratio of anode diffusion layer, the electrode assemblies of Comparative Example 11 having too high water absorption ratio of the anode diffusion layer, the electrode assembly of Comparative Example 12 having too low differential pressure, the electrode assembly of Comparative Example 13 having too high differential pressure, and the electrode assemblies of Comparative Examples 14 and 15 having too low adhesion ratio, all have penetration resistance of not more than 5 mΩ; however, difference of voltage at the fuel shortage test exceeds more than 30 mV. Efficiencies were decreased very much.

C. Third Embodiment

1. Preparation of Electrode Assembly

Example 9

35 g of ion conductive polymer (trade name: Nafion SE20192, produced by Du Pont), 10 g of platinum supporting carbon particles in which weight ratio of carbon black and platinum is 50:50 (trade name: TEC10E50E, produced by Tanaka Kikinzoku Kogyo K. K.), and 2.5 g of crystalline carbon fiber (trade name: VGCF, produced by Showa Denko) were mixed to prepare cathode catalytic paste. This cathode catalytic paste was coated to a FEP sheet so that Pt amount is 0.3 mg/cm$^2$, and dried to prepare a cathode electrode sheet. On the other hand, 36.8 g of ion conductive polymer (trade name: Nafion SE20192, produced by Du Pont) and 10 g of Pt-Ru supporting carbon particles in which weight ratio of the carbon black and the catalyst is 46:54 (trade name: TEC61E54, Pt:Ru=1:1, Tanaka Kikinzoku Kogyo K. K.) were mixed to prepare an anode catalytic paste. This anode catalytic paste was coated to a FEP sheet so that catalyst amount is 0.15 mg/cm$^2$, and dried to prepare an anode electrode sheet.
On the other hand, a carbon paper (trade name: TGP060, produced by Toray Industries Inc.) was immersed into water at 95°C in a pressure resistant container for 100 hours to perform hydrophilic treatment so that contact angle with water is 75°.
25 g of ion conductive polymer (trade name: Nafion SE20192, produced by Du Pont) and 5 g of carbon black powder (trade name: Ketjen black, produced by Cabot) were mixed to prepare a foundation paste C1. 12 g of Teflon (trademark) powder (trade name: L170J, produced by Asahi Glass Co., Ltd.) and 18 g of carbon black powder (trade name: Vulcan XC75, produced by Cabot) were mixed with ethylene glycol to prepare a foundation paste D1. Next, the foundation paste C1 was coated on the carbon paper treated to be hydrophilic as described above so as to be 1.0 mg/cm$^2$, and dried to prepare an anode diffusion layer. On the other hand, the foundation paste D 1 was coated on the same carbon paper so as to be 2.3 mg/cm$^2$, and dried to obtain a cathode diffusion layer.
The electrode sheets of the anode and cathode are transferred to an electrolyte membrane by a decal method (unifying pressure of 40 kg/cm$^2$) to prepare membrane electrode assembly CCM. The anode diffusion layer and the cathode diffusion layer mentioned above, were layered on both sides of the CCM to form electrode assembly MEA of Example 9.

Example 10

Except that coated amount of the foundation paste C 1 of Example 9 was 0.6 mg/cm$^2$, membrane electrode assembly MEA of Example 10 was prepared in a manner similar to that of Example 9.

Example 11

Except that a foundation paste C2 was used instead of the foundation paste C1, a membrane electrode assembly MEA of Example 11 was prepared in a manner similar to that of Example 9. It should be noted that the foundation paste C2 was prepared by mixing 12 g of Teflon (trademark) powder (trade name: L170J, produced by Asahi Glass Co., Ltd.) and 18 g of carbon black powder (trade name: Ketjen black, produced by Cabot) with ethylene glycol.

Example 12

Except that a foundation paste C3 was used instead of the foundation paste C1, a membrane electrode assembly MEA of Example 12 was prepared in a manner similar to that of Example 9. It should be noted that the foundation paste C3 was prepared by mixing 18 g of Teflon (trademark) powder (trade name: L170J, produced by Asahi Glass Co., Ltd.) and 12 g of carbon black powder (trade name: Ketjen black, produced by Cabot) with ethylene glycol.

Comparative Example 16

Except that the contact angle with water was set to 100° in the hydrophilic treatment of the carbon paper by controlling time of immersion into hot water, a membrane electrode assembly MEA of Comparative Example 16 was prepared in a manner similar to that of Example 9.

Comparative Example 17

Except that the contact angle with water was set to 120° in the hydrophilic treatment of the carbon paper by controlling time of immersion into hot water, a membrane electrode assembly MEA of Comparative Example 17 was prepared in a manner similar to that of Example 9.

Comparative Example 18

Except that the contact angle with water was set to 140° in the hydrophilic treatment of the carbon paper by controlling time of immersion into hot water, a membrane electrode assembly MEA of Comparative Example 18 was prepared in a manner similar to that of Example 9.

Comparative Example 19

Except that a foundation paste C4 was used instead of the foundation paste C1 and the coated amount was 1.8 mg/cm$^2$ in the anode diffusion layer forming process, a membrane electrode assembly MEA of Comparative Example 19 was prepared in a manner similar to that of Example 9. It should be noted that the foundation paste C4 was prepared by mixing 25 g of ion conductive polymer (trade name: Nafion SE20192, produced by Du Pont) and 5 g of carbon black powder (trade name: AB-5, produced by Cabot).

Comparative Example 20

Except that a foundation paste C5 was used instead of the foundation paste C1 and the coated amount was 2.3 mg/cm$^2$ in the anode diffusion layer forming process, a membrane electrode assembly MEA of Comparative Example 20 was prepared in a manner similar to that of Example 9. It should be noted that the foundation paste C5 was prepared by mixing 25 g of ion conductive polymer (trade name: Nafion SE20192, produced by Du Pont) and 5 g of carbon black powder (trade name: Vulcan XC75, produced by Cabot).

Comparative Example 21

Except that a foundation paste C6 was used instead of the foundation paste C1 and the coated amount was 1.8 mg/cm$^2$ in the anode diffusion layer forming process, a membrane electrode assembly MEA of Comparative Example 21 was prepared in a manner similar to that of Example 9. It should be noted that the foundation paste C6 was prepared by mixing 40 g of ion conductive polymer (trade name: Nafion SE20192, produced by Du Pont) and 5 g of carbon black powder (trade name: Ketjen black, produced by Cabot).

Comparative Example 22

Except that a foundation paste C7 was used instead of the foundation paste C 1 and the coated amount was 0.8 mg/cm$^2$ in the anode diffusion layer forming process, a membrane electrode assembly MEA of Comparative Example 22 was prepared in a manner similar to that of Example 9. It should be noted that the foundation paste C7 was prepared by mixing 15 g of ion conductive polymer (trade name: Nafion SE20192, produced by DuPont) and 5 g of carbon black powder (trade name: Ketjen black, produced by Cabot).

Comparative Example 23

Except that a foundation paste C8 was used instead of the foundation paste C1 and the coated amount was 1.2 mg/cm$^2$ in the anode diffusion layer forming process, a membrane electrode assembly MEA of Comparative Example 23 was prepared in a manner similar to that of Example 9. It should be noted that the foundation paste C8 was prepared by mixing 35 g of ion conductive polymer (trade name: Nafion SE20192, produced by Du Pont) and 5 g of carbon black powder (trade name: Ketjen black, produced by Cabot).

Comparative Example 24

Except that a foundation paste C9 was used instead of the foundation paste C1, a membrane electrode assembly MEA of Comparative Example 24 was prepared in a manner similar to that of Example 9. It should be noted that the foundation paste C9 was prepared by mixing 20 g of ion conductive polymer (trade name: Nafion SE20192, produced by Du Pont) and 5 g of carbon black powder (trade name: Ketjen black, produced by Cabot).

Comparative Example 25

Except that the unifying pressure of the decal method in the production of the membrane electrode assembly CCM was 30 kg/cm$^2$, a membrane electrode assembly MEA of Comparative Example 25 was prepared in a manner similar to that of Example 9.

Comparative Example 26

Except that the unifying pressure of the decal method in the production of the membrane electrode assembly CCM was 10 kg/cm$^2$, a membrane electrode assembly MEA of Comparative Example 26 was prepared in a manner similar to that of Example 9.

2. Fuel Shortage Test

Fuel shortage tests were performed on fuel cells containing membrane electrode assemblies of Examples and Comparative Examples mentioned above. The test conditions were the same as the test of the first embodiment described above. Differences in voltage calculated by terminal voltages before and after the fuel test are shown in Table 3.

Table 3

| | Contact angle of carbon-based material (°) | Water absorption amount of carbon particles (cc/g) | Water absorption ratio of anode diffusion layer (wt%) | Differential pressure (mmaq) | Adhesion ratio (%) | Penetration resistance (mΩ) | Δ voltage (mV) |
|---|---|---|---|---|---|---|---|
| Example 9 | 75 | 360 | 78.5 | 106 | 20 | 4.2 | 26 |
| Example 10 | 75 | 360 | 51.3 | 65.5 | 19 | 4.4 | 24 |
| Example 11 | 75 | 360 | 65 | 78 | 21 | 4.8 | 24 |
| Example 12 | 75 | 360 | 55 | 87 | 20 | 4.4 | 26 |
| Comparative Example 16 | 100 | 360 | 85 | 82 | 23 | 4.4 | 32 |
| Comparative Example 17 | 120 | 360 | 85 | 70 | 19 | 4.8 | 55 |
| Comparative Example 18 | 140 | 360 | 85 | 65 | 22 | 4.6 | 65 |
| Comparative Example 19 | 75 | 130 | 62 | 70 | 21 | 4.6 | 32 |
| Comparative Example 20 | 75 | 80 | 47 | 62 | 20 | 4.8 | 65 |
| Comparative Example 21 | 75 | 360 | 98 | 103 | 18 | 4.4 | 36 |
| Comparative Example 22 | 75 | 360 | 35 | 62 | 21 | 4.2 | 42 |
| Comparative Example 23 | 75 | 360 | 82 | 130 | 19 | 4.0 | 32 |
| Comparative Example 24 | 75 | 360 | 78 | 45 | 20 | 3.8 | 48 |
| Comparative Example 25 | 75 | 360 | 65 | 93 | 12 | 4.5 | 35.8 |
| Comparative Example 26 | 75 | 360 | 65 | 88 | 8 | 4.6 | 58 |

3. Evaluation

The electrode assemblies of Examples 9 to 12 in which contact angle of carbon-based material, water absorption amount of carbon particles, water absorption ratio of the anode diffusion layer, differential pressure, and adhesion ratio are within the range of the present invention, have penetration resistance of not more than 5 mΩ and difference of voltage at the fuel shortage test of not more than 30 mV. Efficiencies were not decreased very much. On the other hand, the electrode assemblies of Comparative Examples 16 to 18 having too high contact angle, the electrode assemblies of Comparative Examples 19 and 20 having too low water absorption amount of carbon particles, the electrode assembly of Comparative Example 21 having too high water absorption ratio of anode diffusion layer, the electrode assembly of Comparative Example 22 having too low water absorption ratio of anode diffusion layer, the electrode assembly of Comparative Example 23 having too high differential pressure, the electrode assembly of Comparative Example 24 having too low differential pressure, and the electrode assemblies of Comparative Examples 25 and 26 having too low adhesion ratio have penetration resistance of not more than 5 mΩ; however, difference of voltages in the fuel shortage test exceed 30 mV. Efficiencies were decreased very much.

D. Fourth Embodiment

1. Preparation of Electrode Assembly

Example 13

35 g of ion conductive polymer (trade name: Nafion SE20192, produced by Du Pont), 10 g of platinum supporting carbon particles in which weight ratio of carbon black and platinum is 50:50 (trade name: TEC10E50E, produced by Tanaka Kikinzoku Kogyo K. K.), and 2.5 g of crystalline carbon fiber (trade name: VGCF, produced by Showa Denko) were mixed to prepare a cathode catalytic paste. This cathode catalytic paste was coated on a FEP sheet so that Pt amount is 0.3 mg/cm$^2$, and dried to prepare a cathode electrode sheet. On the other hand, 36.8 g of ion conductive polymer (trade name: Nafion SE20192, produced by Du Pont) and 10 g of Pt-Ru supporting carbon particles in which weight ratio of the carbon black and the catalyst is 46:54 (trade name: TEC61E54, Pt:Ru=1:1, Tanaka Kikinzoku Kogyo K. K.) were mixed to prepare an anode catalytic paste. This anode catalytic paste was coated to a FEP sheet so that catalyst amount is 0.15 mg/cm$^2$, and dried to prepare an anode electrode sheet.
On the other hand, two sheets of carbon paper (trade name: TGP060, produced by Toray Industries Inc.) were immersed in water at 95°C in a pressure resistant container to perform hydrophilic treatment so that contact angle with water thereof become 140° and 75°, to prepare two sheets of carbon paper for a cathode diffusion layer and an anode diffusion layer mutually.
On the other hand, 12 g of Teflon (trademark) powder (trade name: L170J, produced by Asahi Glass Co., Ltd.) and 18 g of carbon black powder (trade name: Ketjen black, produced by Cabot) were mixed with ethylene glycol to prepare a foundation paste E1, and 12 g of Teflon (trademark) powder (trade name: L170J, produced by Asahi Glass Co., Ltd.) and 18 g of carbon black powder (trade name: AB-5, produced by Cabot) were mixed with ethylene glycol to prepare a foundation paste F1. Next, the foundation paste E1 was coated to the carbon paper for anode diffusion layer treated to be hydrophilic as described above so as to be 2.3 mg/cm$^2$, and dried to obtain the anode diffusion layer. On the other hand, the foundation paste F1 was coated on the carbon paper for cathode diffusion layer so as to be 2.3 mg/cm$^2$, and dried to obtain the cathode diffusion layer.
The electrode sheets of the anode and cathode are transferred to an electrolyte membrane by a decal method (unifying pressure of 40 kg/cm$^2$) to prepare membrane electrode assembly CCM. The anode diffusion layer and the cathode diffusion layer mentioned above, were layered on both sides of the CCM to form electrode assembly MEA of Example 13.

Example 14

Except that a foundation paste F2 was used instead of the foundation paste F1, a membrane electrode assembly MEA of Example 14 was prepared in a manner similar to that of Example 13. It should be noted that the foundation paste F2 was prepared by mixing 12 g of Teflon (trademark) powder (trade name: L170J, produced by Asahi Glass Co., Ltd.) and 18 g of carbon black powder (trade name: VulcanXC75, produced by Cabot) with ethylene glycol.

Example 15

Except that foundation pastes E2 and F3 were used instead of the foundation pastes E1 and F1, a membrane electrode assembly MEA of Example 15 was prepared in a manner similar to that of Example 13. It should be noted that the foundation paste E2 was prepared by mixing 9 g of Teflon (trademark) powder (trade name: L170J, produced by Asahi Glass Co., Ltd.) and 21 g of carbon black powder (trade name: Ketjen black, produced by Cabot) with ethylene glycol, and the foundation paste F3 was prepared by mixing 9 g of Teflon (trademark) powder (trade name: L170J, produced by Asahi Glass Co., Ltd.) and 21 g of carbon black powder (trade name: AB-5, produced by Cabot) with ethylene glycol.

Example 16

Except that foundation pastes E3 and F4 were used instead of the foundation pastes E1 and F1, a membrane electrode assembly MEA of Example 16 was prepared in a manner similar to that of Example 13. It should be noted that the foundation paste E3 was prepared by mixing 21 g of Teflon (trademark) powder (trade name: L170J, produced by Asahi Glass Co., Ltd.) and 9 g of carbon black powder (trade name: Ketjen black, produced by Cabot) with ethylene glycol, and the foundation paste F4 was prepared by mixing 21 g of Teflon (trademark) powder (trade name: L170J, produced by Asahi Glass Co., Ltd.) and 9 g of carbon black powder (trade name: AB-5, produced by Cabot) with ethylene glycol.

Comparative Example 27

Except that foundation paste F5 was used instead of the foundation paste F1, a membrane electrode assembly MEA of Comparative Example 27 was prepared in a manner similar to that of Example 13. It should be noted that the foundation paste F5 was prepared by mixing 12 g of Teflon (trademark) powder (trade name: L170J, produced by Asahi Glass Co., Ltd.) and 18 g of carbon black powder (trade name: Ketjen black, produced by Cabot) with ethylene glycol.

Comparative Example 28

Except that foundation paste F6 was used instead of the foundation paste F1, a membrane electrode assembly MEA of Comparative Example 28 was prepared in a manner similar to that of Example 13. It should be noted that the foundation paste F6 was prepared by mixing 12 g of Teflon (trademark) powder (trade name: L170J, produced by Asahi Glass Co., Ltd.) and 18 g of carbon black powder (trade name: Ketjen black 600JD, produced by Cabot) with ethylene glycol.

Comparative Example 29

Except that foundation paste E4 was used instead of the foundation paste E1, a membrane electrode assembly MEA of Comparative Example 29 was prepared in a manner similar to that of Example 13. It should be noted that the foundation paste E4 was prepared by mixing 12 g of Teflon (trademark) powder (trade name: L170J, produced by Asahi Glass Co., Ltd.) and 18 g of carbon black powder (trade name: AB-5, produced by Cabot) with ethylene glycol.

Comparative Example 30

Except that foundation paste E5 was used instead of the foundation paste E1, a membrane electrode assembly MEA of Comparative Example 30 was prepared in a manner similar to that of Example 13. It should be noted that the foundation paste E5 was prepared by mixing 12 g of Teflon (trademark) powder (trade name: L170J, produced by Asahi Glass Co., Ltd.) and 18 g of carbon black powder (trade name: Vulcan XC75, produced by Cabot) with ethylene glycol.

Comparative Example 31

Except that foundation paste E6 was used instead of the foundation paste E1, a membrane electrode assembly MEA of Comparative Example 31 was prepared in a manner similar to that of Example 13. It should be noted that the foundation paste E6 was prepared by mixing 24 g of Teflon (trademark) powder (trade name: L170J, produced by Asahi Glass Co., Ltd.) and 6 g of carbon black powder (trade name: Ketjen black, produced by Cabot) with ethylene glycol.

Comparative Example 32

Except that foundation paste E7 was used instead of the foundation paste E1, a membrane electrode assembly MEA of Comparative Example 32 was prepared in a manner similar to that of Example 13. It should be noted that the foundation paste E7 was prepared by mixing 6 g of Teflon (trademark) powder (trade name: L170J, produced by Asahi Glass Co., Ltd.) and 24 g of carbon black powder (trade name: Ketjen black, produced by Cabot) with ethylene glycol.

Comparative Example 33

Except that foundation paste F7 was used instead of the foundation paste E1, a membrane electrode assembly MEA of Comparative Example 33 was prepared in a manner similar to that of Example 13. It should be noted that the foundation paste F7 was prepared by mixing 24 g of Teflon (trademark) powder (trade name: L170J, produced by Asahi Glass Co., Ltd.) and 6 g of carbon black powder (trade name: AB-5, produced by Cabot) with ethylene glycol.

Comparative Example 34

Except that foundation paste F8 was used instead of the foundation paste E1, a membrane electrode assembly MEA of Comparative Example 34 was prepared in a manner similar to that of Example 13. It should be noted that the foundation paste F8 was prepared by mixing 6 g of Teflon (trademark) powder (trade name: L170J, produced by Asahi Glass Co., Ltd.) and 24 g of carbon black powder (trade name: AB-5, produced by Cabot) with ethylene glycol.

Comparative Example 35

Except that the unifying pressure of the decal method in the production of the membrane electrode assembly CCM was 30 kg/cm$^2$, a membrane electrode assembly MEA of Comparative Example 35 was prepared in a manner similar to that of Example 13.

Comparative Example 36

Except that the unifying pressure of the decal method in the production of the membrane electrode assembly CCM was 10 kg/cm$^2$, a membrane electrode assembly MEA of Comparative Example 36 was prepared in a manner similar to that of Example 13.

2. Fuel Shortage Test

Fuel shortage tests were performed on fuel cells containing membrane electrode assemblies of Examples and Comparative Examples mentioned above. The test conditions were the same as the test of the first embodiment described above. Differences in voltage calculated by terminal voltages before and after the fuel test are shown in Table 4.

Table 4

| | Water absorption amount of carbon particles (cc/g) | | Water absorption ratio of anode diffusion layer (wt%) | Differential pressure (mmaq) | | Adhesion ratio (%) | Penetration resistance (mΩ) | | Δ voltage (mV) |
|---|---|---|---|---|---|---|---|---|---|
| | Anode | Cathode | | Anode | Cathode | | Anode | Cathode | |
| Example 13 | 360 | 130 | 65 | 85 | 83 | 20 | 2.2 | 3.2 | 28 |
| Example 14 | 360 | 80 | 65 | 85 | 83 | 21 | 2.2 | 2.8 | 24 |
| Example 15 | 360 | 130 | 82.4 | 62 | 62 | 19 | 1.8 | 2.6 | 28 |
| Example 16 | 360 | 130 | 50.4 | 100 | 105 | 20 | 2.6 | 3.4 | 25 |
| Comparative Example 27 | 360 | 360 | 82.4 | 85 | 83 | 21 | 2.2 | 3.2 | 44.7 |
| Comparative Example 28 | 360 | 520 | 82.4 | 85 | 83 | 22 | 2.2 | 2.4 | 55 |
| Comparative Example 29 | 130 | 130 | 37.6 | 83 | 83 | 20 | 2.6 | 3.2 | 32.3 |
| Comparative Example 30 | 80 | 130 | 20 | 83 | 83 | 19 | 2.8 | 3.2 | 65 |
| Comparative Example 31 | 360 | 130 | 32.2 | 128 | 83 | 19 | 3.6 | 3.2 | 32 |
| Comparative Example 32 | 360 | 130 | 95 | 42 | 83 | 21 | 1.8 | 3.2 | 58 |
| Comparative Example 33 | 360 | 130 | 82.4 | 85 | 132 | 20 | 2.2 | 4.8 | 33.4 |
| Comparative Example 34 | 360 | 130 | 82.4 | 85 | 45 | 20 | 2.2 | 2.6 | 62 |
| Comparative Example 35 | 360 | 130 | 82.4 | 85 | 83 | 12.5 | 2.2 | 3.2 | 34 |
| Comparative Example 36 | 360 | 130 | 82.4 | 85 | 83 | 7.3 | 2.2 | 3.2 | 58 |

3. Evaluation

The electrode assemblies of Examples 13 to 16 in which water absorption amount of carbon particles of the anode diffusion layer and the cathode diffusion layer, water absorption ratio of the anode diffusion layer, differential pressure of the anode diffusion layer and the cathode diffusion layer, and adhesion ratio are within the range of the present invention, have penetration resistance of not more than 5 mΩ and difference of voltage at the fuel shortage test of not more than 30 mV. Efficiencies were not decreased very much. On the other hand, the electrode assemblies of Comparative Examples 27 and 28 having too high water absorption amount of carbon particles of the cathode diffusion layer, the electrode assemblies of Comparative Examples 29 and 30 having too low water absorption amount of the carbon particles of the anode diffusion layer and too low water absorption ratio of the anode diffusion layer, the electrode assembly of Comparative Example 31 having too low water absorption ratio of the anode diffusion layer and too high differential pressure of the anode diffusion layer, the electrode assembly of Comparative Example 32 having too high water absorption ratio of the anode diffusion layer and too low differential pressure of the anode diffusion layer, the electrode assembly of Comparative Example 33 having too high differential pressure of the cathode diffusion layer, the electrode assembly of Comparative Example 34 having too low differential pressure of the cathode diffusion layer, and the electrode assemblies of Comparative Examples 35 and 36 having too low adhesion ratio, have penetration resistance of not more than 5 mΩ; however, differences in voltages in the fuel shortage tests exceed 30 mV. Efficiencies were decreased very much.

4. Investigation of Contact Angle of carbon-based material

To investigate contact angle of the carbon-based material with water in the anode diffusion layer and the cathode diffusion layer, electrode assemblies of Samples 1 to 4 were prepared in a manner similar to that of Example 13 except for using carbon-based materials each having different contact angle with water, and fuel shortage tests similar to those described above was performed. The results are shown in Table 5.

Sample 1

Except that the immersion time in hot water in the hydrophilic treatment of the carbon paper for the anode diffusion layer was controlled so that the contact angle with water was 100°, a membrane electrode assembly MEA of Sample 1 was prepared in a manner similar to that of Example 13.

Sample 2

Except that the immersion time in hot water in the hydrophilic treatment of the carbon paper for the anode diffusion layer was controlled so that the contact angle with water was 130°, a membrane electrode assembly MEA of Sample 2 was prepared in a manner similar to that of Example 13.

Sample 3

Except that the immersion time in hot water in the hydrophilic treatment of the carbon paper for the cathode diffusion layer was controlled so that the contact angle with water was 100°, a membrane electrode assembly MEA of Sample 3 was prepared in a manner similar to that of Example 13.

Sample 4

Except that the immersion time in hot water in the hydrophilic treatment of the carbon paper for the cathode diffusion layer was controlled so that the contact angle with water was 75°, a membrane electrode assembly MEA of Sample 4 was prepared in a manner similar to that of Example 13.

Table 5

| | Water absorption amount of carbon particles (cc/g) | | Water absorption ratio of anode diffusion layer (wt%) | Differential pressure (mmaq) | | Adhesion ratio (%) | Penetration resistance (mΩ) | | Δ voltage (mV) |
|---|---|---|---|---|---|---|---|---|---|
| | Anode | Cathode | | Anode | Cathode | | Anode | Cathode | |
| Example 1 | 75 | 140 | 65 | 85 | 83 | 20 | 2.2 | 3.2 | 28 |
| Sample 1 | 100 | 140 | 82.4 | 85 | 83 | 20 | 2.2 | 3.2 | 36 |
| Sample 2 | 130 | 140 | 82.4 | 85 | 83 | 19 | 2.2 | 3.2 | 58 |
| Sample 3 | 75 | 100 | 82.4 | 85 | 83 | 19 | 2.2 | 3.2 | 36.3 |
| Sample 4 | 75 | 75 | 82.4 | 85 | 83 | 21 | 2.2 | 3.2 | 54 |

As is clear from Table 5, in Samples 1 and 2 having larger contact angle of carbon-based material than that of the range of the present invention (that is, water-repellent), water which must be retained in the anode diffusion layer migrates to the anode catalytic layer, and flooding occurred in the anode catalytic layer, and in Samples 3 and 4 having smaller contact angle of carbon-based material than that of the range of the present invention (that is, hydrophilic), water generated in the cathode catalytic layer is retained in the cathode, and flooding occurred in the cathode catalytic layer, and therefore, in spite the penetration resistance being not more than 5 mΩ, the voltage difference in the fuel shortage test undesirably exceeded 30 mV.

As explained above, by the present invention, the reverse diffusion water amount from the cathode to the anode can be increased, and water holding property is given to the anode diffusion layer, not to the anode catalytic layer. Therefore, water is supplied from the anode diffusion layer to the anode catalytic layer under conditions of fuel shortage, and the water is electrolyzed in the anode catalytic layer to supply protons to the polymer electrolyte membrane. Efficiency deterioration can be restrained even under fuel shortage conditions.

**Claims**

1. A membrane electrode assembly for a polymer electrolyte fuel cell, comprising:

    a polymer electrolyte membrane; and
    an anode and a cathode each having a catalytic layer and a diffusion layer,
    the anode diffusion layer further comprising:

        a carbon-based material; and
        a water holding layer thereon containing water holding material for 5 to 20 wt% of total weight of an electron conductive material and the water holding material, or carbon particles having water absorption amount at saturated water vapor pressure at 60°C of not less than 150 cc/g,

    wherein water absorption ratio of the anode diffusion layer at 60°C is in a range of 40 to 85%,
    wherein a differential pressure measured by the differential pressure measuring method is in a range of 60 to 120 mmaq, and
    wherein a ratio of quantity of electric charge of catalytic material of the cathode catalytic layer existing in proton conductive passage from the polymer electrolyte membrane measured by a cyclic voltammetric method is not less than 15% of the quantity of electric charge of all the catalytic material existing in the cathode catalytic layer.

2. The membrane electrode assembly for a polymer electrolyte fuel cell according to claim 1, wherein the anode diffusion layer comprises:

    a carbon-based material;
    a layer thereon having carbon particles and fluorine resin; and
    a layer thereon having carbon particles, a polymer electrolyte, void forming agent, and water holding material.

3. The membrane electrode assembly for a polymer electrolyte fuel cell according to claim 1, wherein the anode diffusion layer comprises:

    a carbon-based material;
    a layer thereon having carbon particles, fluorine resin, and water holding material.

4. A membrane electrode assembly for a polymer electrolyte fuel cell, comprising:

    a polymer electrolyte membrane; and
    an anode and a cathode each having a catalytic layer and a diffusion layer,
    the anode diffusion layer further comprising:

        a carbon-based material having a contact angle with water of not more than 90° by performing a hydrophilic treatment; and
        a layer thereon having carbon particles having water absorption amount at saturated water vapor pressure at 60°C of not less than 150 cc/g and fluorine resin,

wherein water absorption ratio of the anode diffusion layer at 60°C is in a range of 40 to 85%,

wherein penetration resistance measured by a penetration resistance method is not more than 5 mΩ,

wherein a differential pressure measured by the differential pressure measuring method is in a range of 60 to 120 mmaq, and

wherein a ratio of quantity of electric charge of catalytic material of the cathode catalytic layer existing in proton conductive passage from the polymer electrolyte membrane measured by a cyclic voltammetric method is not less than 15% of the quantity of electric charge of all the catalytic material existing in the cathode catalytic layer.

5. A membrane electrode assembly for a polymer electrolyte fuel cell, comprising:

a polymer electrolyte membrane; and
an anode and a cathode each having a catalytic layer and a diffusion layer,
the catalytic layer comprising:

at least a catalyst;
carbon particles supporting the catalyst; and
polymer electrolyte,
the cathode catalytic layer further contains void forming agent,
the diffusion layer comprising:

a carbon-based material; and
a layer thereon containing carbon particles and fluorine resin,

wherein water absorption amount at saturated water vapor pressure at 60°C of the carbon particles of the anode diffusion layer is not less than 150 cc/g and water absorption amount at saturated water vapor pressure at 60°C of the carbon particles of the cathode diffusion layer is less than 150 cc/g,

wherein water absorption ratio of the anode diffusion layer at 60°C is in a range of 40 to 85%,

wherein a differential pressure of the anode diffusion layer and the cathode diffusion layer measured by the differential pressure measuring method is in a range of 60 to 120 mmaq and penetration resistance measured by a penetration resistance method is not more than 5mΩ, and

wherein a ratio of quantity of electric charge of catalytic material of the cathode catalytic layer existing in proton conductive passage from the polymer electrolyte membrane measured by a cyclic voltammetric method is not less than 15% of the quantity of electric charge of all the catalytic material existing in the cathode catalytic layer.

6. The membrane electrode assembly for a polymer electrolyte fuel cell according to claim 5, wherein the carbon-based material of the anode diffusion layer has contact angle with water of not more than 90° by performing a hydrophilic treatment, and the carbon-based material of the cathode diffusion layer has a contact angle with water of not less than 130° by performing a water-repellent treatment.

# Fig. 1

# Fig. 2

## Fig. 3

## Fig. 4

## Fig. 5

## Fig. 6

Fig. 7

Fig. 8

## Fig. 9

## Fig. 10

# Fig. 11

Water absorption amount of cathode carbon particles (cc/g)

# Fig. 12

Water absorption amount of anode carbon particles (cc/g)

## Fig. 13

Y-axis: Voltage decrease (mV)
X-axis: Water absorption ratio of anode diffusion layer (%)

## Fig. 14

Y-axis: Voltage decrease (mV)
X-axis: Contact angle of carbon based material of cathode diffusion layer (°)

# Fig. 15

Contact angle of carbon based material of anode diffusion layer (° )

# Fig. 16

Differential pressure of cathode (mmaq)

# Fig. 17

Voltage decrease (mV) vs Differential pressure of anode (mmaq)

# Fig. 18

Current density (A/cm²) vs Time (sec)

## INTERNATIONAL SEARCH REPORT

| International application No. |
|---|
| PCT/JP03/13415 |

**A. CLASSIFICATION OF SUBJECT MATTER**
Int.Cl$^7$ H01M4/86, H01M8/10

According to International Patent Classification (IPC) or to both national classification and IPC

**B. FIELDS SEARCHED**

Minimum documentation searched (classification system followed by classification symbols)
Int.Cl$^7$ H01M4/86, H01M8/10

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| A | JP 7-78617 A (Mitsubishi Heavy Industries, Ltd.), 20 March, 1995 (20.03.95), Claims; Fig. 3 (Family: none) | 1-6 |
| A | JP 2002-93433 A (Toto Ltd.), 29 March, 2002 (29.03.02), Claims (Family: none) | 1-6 |
| A | JP 11-214020 A (Japan Science and Technology Corp.), 06 August, 1999 (06.08.99), Claims; Par. No. [0010] (Family: none) | 1-6 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 December, 2003 (01.12.03) | 16 December, 2003 (16.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)